# EUROPEAN PATENT SPECIFICATION

(11) **EP 3 340 662 B1**
(45) Date of publication and mention of the grant of the patent: **11.09.2019**
(21) Application number: 16838436.0
(22) Date of filing: 08.07.2016
(51) Int. Cl.: H04W 4/00, H04L 9/32, H04W 40/36

(54) **METHOD AND APPARATUS FOR ACQUIRING DEVICE-TO-DEVICE (D2D) AUTHORIZATION INFORMATION**
VERFAHREN UND VORRICHTUNG ZUR ERFASSUNG VON VORRICHTUNG-ZU-VORRICHTUNG-BERECHTIGUNGSINFORMATIONEN
PROCÉDÉ ET APPAREIL POUR ACQUÉRIR DES INFORMATIONS D'AUTORISATION DE DISPOSITIF À DISPOSITIF (D2D)

(30) Priority: 21.08.2015 CN 201510520203
(43) Date of publication of application: 27.06.2018
(73) Proprietor: ZTE Corporation, Shenzhen, Guangdong 518057 (CN)
(72) Inventor: GAO, Yin, Shenzhen Guangdong 518057 (CN); WU, Yunlu, Shenzhen Guangdong 518057 (CN); CHEN, Lin, Guangdong 518057 (CN)
(74) Representative: Lavoix
(86) International application number: PCT/CN2016/089448
(87) International publication number: WO 2017/032176

(56) References cited:
- WO-A1-2015/065010
- WO-A1-2015/115959
- CN-A- 103 648 103
- CN-A- 104 797 000
- ZTE: "Discussion on the ProSe authorised indication in X2 handover", 3GPP DRAFT; R3-141809, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Dresden, Germany; 20140818 - 20140822 8 August 2014 (2014-08-08), XP050821783, Retrieved from the Internet: URL:http://www.3gpp.org/ftp/tsg_ran/WG3_Iu /TSGR3_85/Docs/ [retrieved on 2014-08-08]
- ZHENG KAN ET AL: "10 Gb/s hetsnets with millimeter-wave communications: access and networking - challenges and protocols", IEEE COMMUNICATIONS MAGAZINE, IEEE SERVICE CENTER, PISCATAWAY, US, vol. 53, no. 1, 1 January 2015 (2015-01-01), pages 222-231, XP011570609, ISSN: 0163-6804, DOI: 10.1109/MCOM.2015.7010538 [retrieved on 2015-01-14]
- ETSI MCC: "Draft Report of 3GPP TSG RAN WG2 meeting #86", 3GPP DRAFT; R2-14XXXX_DRAFT_REPORT_RAN2_86_SEOUL_V0.1_ 140528, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN, no. Dresden, Germany; 20140818 - 20140822 8 August 2014 (2014-08-08), XP050819281, Retrieved from the Internet: URL:http://www.3gpp.org/ftp/tsg_ran/WG2_RL 2/TSGR2_86/Report/history/ [retrieved on 2014-08-08]
- ALCATEL -LUCENT SHANGHAI BELL ET AL.: '3GPP TSG RAN WG3 Meeting #87 R3-150209' MANAGING D2D SERVICE CONTINUITY 13 February 2015, XP050936962

## Description

### TECHNICAL FIELD

The disclosure relates to, but not limited to the field of communications, and in particular to a method and apparatus for acquiring Device-to-Device (D2D) authorization information.

### BACKGROUND

A Long Term Evolution (LTE) system includes: a Mobility Management Entity (MME) and a Serving Gateway (SGW), a UU interface being provided between a User Equipment (UE) and an evolved Node B (eNB), an S1-MME (S1 for the control plane) interface being provided between the eNB and the MME, an S1-U interface being provided between the eNB and the SGW, and X2-U (X2-User plane) and X2-C (X2-Control plane) interfaces being provided between eNBs. In the LTE system, a protocol stack of the S1-MME interface is divided, from down to up, into several protocol layers: L1 protocol, L2 protocol, Internet Protocol (IP), Stream Control Transmission Protocol (SCTP), and S1-Application Protocol (S1-AP). In the LTE system, a protocol stack of the S1-U interface is divided, from down to up, into several protocol layers: L1 protocol, L2 protocol, User Data Protocol (UDP)/IP, and General Packet Radio Service (GPRS) Tunneling Protocol-User plane (GTP-U).

At present, due to lack of spectrum resources and sharp increase of large-traffic services of mobile users, in order to improve user throughput and to enhance mobility, demands for hot spot coverage via a high frequency point such as 3.5GHz are increasingly obvious, and a low-power node is adopted as a new application scenario. However, signal attenuation of the high frequency point is severe, a coverage range of a new cell is relatively small, and the new cell does not share a station with a current cell. Therefore, if a user moves between these new cells or moves between the new cell and the current cell, a frequent handover process will be caused, such that user information is frequently transferred between eNBs to cause a great signaling impact on a core network, thereby restraining introduction of a great number of micro-cell eNBs at a radio side.

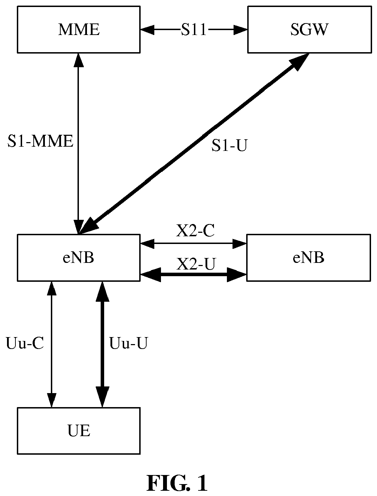

FIG. 1 is an overall architecture schematic diagram of a micro-cell eNB system. As shown in FIG. 1, the architecture includes: an MME and an SGW, a UU interface being provided between a UE and an eNB, an S1-MME (S1 for the control plane) interface being provided between a Master eNB (MeNB) and the MME, an S1-U interface being provided among the MeNB, a Secondary eNB (SeNB) and the SGW, and X2 interfaces being provided between eNBs. User data may be issued to a user from the core network by means of the MeNB, or may be issued to a user from the core network by means of the SeNB. When the user accesses the MeNB, dual connection may be implemented in a manner of adding, modifying and deleting the SeNB.

Meanwhile, with the development of wireless multimedia services, demands of people for high data rate and user experience are increasing, so as to make higher requirements for system capacity and coverage of a traditional cellular network. In addition, the popularization of applications such as social networking, near field data sharing and local advertising enable demands of people, for knowing people or things of interest nearby and communicating (proximity services) therewith, to gradually increase. A conventional cell-based cellular network has obvious limitations to high data rate and supporting of proximity services, and under this demand background, a D2D technology representative of a new development direction of future communication technologies emerges. The application of the D2D technology may alleviate burdens on the cellular network, reduce the power consumption of a battery of a UE, increase the data rate, improve the robustness of network infrastructure, and well meet requirements for the foregoing high data rate services and proximity services.

The D2D technology may work at a licensed band or an unlicensed band to allow multiple UEs (i.e., D2D UE) supporting a D2D function to perform direct discovery/direct communication in the presence of network infrastructure or in the absence of network infrastructure. The D2D technology usually includes a D2D discovery technology and a D2D communication technology.
(1) The D2D discovery technology refers to a technology for judging and/or determining whether two or more D2D UEs are proximal to each other (e.g., within a range capable of performing D2D direct communication) or judging and/or determining whether a first UE is proximal to a second UE.
(2) The D2D communication technology refers to a technology for direct communication of some or all communication data between D2D UEs without network infrastructure.

D2D communication may reuse cellular communication resources. Under a scenario of cellular network coverage, D2D communication resources are usually scheduled and allocated by an eNB, so that resource reuse efficiency can be improved, and meanwhile, a control effect of a network side over D2D communication and an effect of interference coordination between D2D communication and cellular communication are ensured. If the same UE supports a D2D function, D2D communication with another D2D UE and cellular communication with an eNB may be performed simultaneously.

Under a single connection scenario, an eNB acquires D2D authorization information of a UE by means of an initial context setup request message and a UE context modification request message. Meanwhile, in a handover process, a target eNB acquires D2D authorization information of a UE by means of an S1 handover request message for S1 handover, and the target eNB acquires the D2D authorization information of the UE by means of an X2 handover request message and an S1 path switch request acknowledge message for X2 handover. Here, the D2D authorization information of the UE provides authorization state information of the UE for ProSe services (including ProSe direct discovery and ProSe direct communication).

Any effective solution has not been proposed yet for the problem in the related art in which an eNB cannot acquire D2D authorization information of a UE under the condition of dual connection of the UE.

The document "ZTE: 'Discussion on the ProSe authorized indication in X2 handover', 3GPP DRAFT; R3-141809, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG3, no. Dresden, Germany; 20140818-20140822 8 August 2014," discloses that an LS on introducing the ProSe Authorized IE has been sent in RAN3#84 to inform SA2 that RAN3 has agreed to signal the ProSe Authorized IE in the INITIAL CONTEXT SETUP REQUEST, the UE CONTEXT MODIFICATION REQUEST, the S1 HANDOVER REQUEST message. In the replay LS, SA2 would like to know why RAN3 intends to add the ProSe Authorized IE both in the X2 HANDOVER REQUEST message and the SI PATH SWITCH REQUEST ACKNOWLEDGE message going towards the same target eNB for the X2 handover, and requests RAN3 to chech whether the ProSe Authorized IE is really need to be included in the X2 HANDOVER REQUEST message. This document mainly compares the ProSe Authorized IE included in the X2 HANDOVER REQUEST message and the ProSe Authorized IE only signaled in the S1 PATH SWITCH REQUEST ACKNOWLEDGE message by analyzing the delay budget of D2D discovery/communication transmission.

The document "ZHENG KAN ET AL: '10 Gb/s hetsnets with millimeter-wave communications: access and networking-challenges and protocols', IEEE COMMUNICATIONS MAGAZINE, IEEE SERVICE CENTRE, PISCATAWAY, US, vol. 53, no. 1, 1 January 2015, pages 222-231," discloses that heterogeneous and small cell networks (HetSNets) increase spectral efficiency and through-put via hierarchical deployments. In order to meet the increasing requirements in capacity for future 5G wireless networks, millimeter-wave (mm Wave) communications with unprecedented spectral resources have been suggested for 5G HetSNets. While the mm Wave physical layer is well understood, major challenges remain for its effective and efficient implementation in HetSNets from an access and networking point of view. Toward this end, a novel but 3GPP backwards-compatible frame structure is introduced, based on time-division duplex, which facilitates both high-capacity access and backhaul links. Then networking issues arising from the multihop nature of the mm Wave backhauling mesh is discussed. Finally, system-level simulations evaluate the performance of HetSNets with mm Wave communications and corroborate the possibility of having capacities of tens of gigabits per second in emerging 5G systems.

### SUMMARY

The following is a brief introduction for a subject described herein in detail. The brief introduction is not intended to restrict the scope of protection of claims.

The embodiments of the disclosure provide a method and apparatus for acquiring D2D authorization information, enabling an SeNB to obtain D2D authorization information of a UE under the condition of dual connection of the UE.

According to one aspect of the embodiments of the disclosure, a method for acquiring D2D authorization information under the condition of dual connection is provided. The method includes: an SeNB acquires D2D authorization information of a UE from an MeNB by means of an X2 interface process; the X2 interface process includes: an SeNB addition process or an SeNB modification process.

Alternatively, the D2D authorization information includes at least one of: D2D communication authorization, D2D discovery authorization, relay UE authorization, remote UE authorization, and one or more Public Land Mobile Networks (PLMNs) corresponding to each authorization.

Alternatively, the method may further include:
the SeNB allocates a D2D resource to the UE according to the D2D authorization information.

According to another aspect of the embodiments of the disclosure, a method for acquiring D2D authorization information under the condition of dual connection is provided. The method includes: an MeNB acquires D2D authorization information of a UE from an MME; and the MeNB provides the D2D authorization information to an SeNB by means of an X2 interface process, herein the SeNB allocates a D2D resource to the UE according to the D2D authorization information; the X2 interface process includes: an SeNB addition process or an SeNB modification process.

Alternatively, the step that the MeNB acquires the D2D authorization information of the UE from the MME includes: the MeNB requests the MME for acquiring the D2D authorization information of the UE under a Public Land Mobile Network (PLMN) served by the SeNB under the condition that a PLMN served by the SeNB for the UE is different from a PLMN served by the MeNB for the UE.

Alternatively, the step that the MeNB requests the MME for acquiring the D2D authorization information of the UE under a PLMN served by the SeNB includes: the MeNB acquires the D2D authorization information of the UE under the PLMN served by the SeNB from the MME by means of an S1 interface process, herein the S1 interface process includes: an evolved Radio Access Bearer (ERAB) modification indication process or an S1 interface addition process.

According to a further aspect of the embodiments of the disclosure, an apparatus for acquiring D2D authorization information under the condition of dual connection is also provided. The apparatus includes: a first acquisition module, configured to acquire D2D authorization information of a UE from an MeNB by means of an X2 interface process; the X2 interface process includes: an SeNB addition process or an SeNB modification process.

Alternatively, the apparatus may further include:
an allocation module, configured to allocate a D2D resource to the UE according to the D2D authorization information.

According to a yet further aspect of the embodiments of the disclosure, an apparatus for acquiring D2D authorization information under the condition of dual connection is also provided. The apparatus includes: a second acquisition module, configured to acquire D2D authorization information of a UE from an MME; and a provision module, configured to provide the D2D authorization information to an SeNB by means of an X2 interface process, herein the SeNB allocates a D2D resource to the UE according to the D2D authorization information; the X2 interface process includes: an SeNB addition process or an SeNB modification process.

Alternatively, the second acquisition module includes: a request acquisition unit, configured to request the MME for acquiring the D2D authorization information of the UE under a PLMN served by the SeNB under the condition that a PLMN served by the SeNB for the UE is different from a PLMN served by an MeNB for the UE.

Alternatively, the request acquisition unit is configured to request the MME for acquiring the D2D authorization information of the UE under a PLMN served by the SeNB in the following manner: acquiring the D2D authorization information of the UE under the PLMN served by the SeNB from the MME by means of an S1 interface process, herein the S1 interface process includes: an ERAB modification indication process or an S1 interface addition process.

By means of the embodiments of the disclosure, an SeNB acquires D2D authorization information of a UE from an MeNB by means of an X2 interface process; and the SeNB allocates a D2D resource to the UE according to the D2D authorization information. An SeNB can obtain D2D authorization information of a UE under the condition of dual connection.

After the drawings and the detailed descriptions are read and understood, other aspects may be understood.

### BRIEF DESCRIPTION OF DRAWINGS

FIG. 1 is an overall architecture schematic diagram of a micro-cell eNB system in the related art.
FIG. 2 is a first flowchart of a method for acquiring D2D authorization information according to an embodiment of the disclosure.
FIG. 3 is a second flowchart of a method for acquiring D2D authorization information according to an embodiment of the disclosure.
FIG. 4 is a first block diagram of an apparatus for acquiring D2D authorization information according to an embodiment of the disclosure.
FIG. 5 is a second block diagram of an apparatus for acquiring D2D authorization information according to an embodiment of the disclosure.
FIG. 6 is a first block diagram of an apparatus for acquiring D2D authorization information according to an alternative embodiment of the disclosure.
FIG. 7 is a schematic diagram of a dual connection architecture under a micro-eNB scenario according to an embodiment of the disclosure.
FIG. 8 is a first flowchart of a method for acquiring D2D authorization information according to an alternative embodiment of the disclosure.
FIG. 9 is a second flowchart of a method for acquiring D2D authorization information according to an alternative embodiment of the disclosure.
FIG. 10 is a third flowchart of a method for acquiring D2D authorization information according to an embodiment of the disclosure.

### DETAILED DESCRIPTION

The disclosure will be described below with reference to the drawings and in conjunction with the embodiments in detail. It should be noted that the embodiments in the present application and the characteristics in the embodiments may be combined mutually without conflicts.

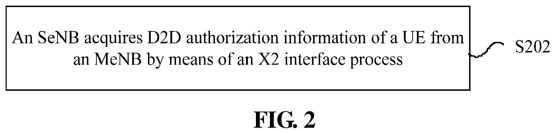

The embodiments of the disclosure provide a method for acquiring D2D authorization information. FIG. 2 is a first flowchart of a method for acquiring D2D authorization information according to an embodiment of the disclosure. As shown in FIG. 2, the method includes the steps as follows.

In step S202, an SeNB acquires D2D authorization information of a UE from an MeNB by means of an X2 interface process.

The SeNB may allocate a D2D resource to the UE according to the D2D authorization information.

By means of the above-mentioned step, an SeNB acquires D2D authorization information of a UE from an MeNB by means of an X2 interface process, so that the SeNB obtains the D2D authorization information of the UE under the condition of dual connection.

Alternatively, the D2D authorization information includes at least one of the following: D2D communication authorization, D2D discovery authorization, relay UE authorization, remote UE authorization, and one or more Public Land Mobile Networks (PLMNs) corresponding to each authorization.

Alternatively, the X2 interface process includes: an SeNB addition process or an SeNB modification process.

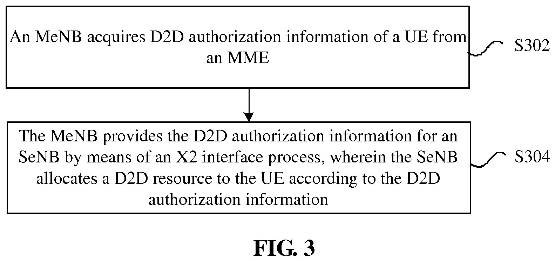

The embodiments of the disclosure also provide a method for acquiring D2D authorization information. FIG. 3 is a second flowchart of a method for acquiring D2D authorization information according to an embodiment of the disclosure. As shown in FIG. 3, the method includes the steps as follows.

In step S302, an MeNB acquires D2D authorization information of a UE from an MME.

In step S304, the MeNB provides the D2D authorization information to an SeNB by means of an X2 interface process, herein the SeNB allocates a D2D resource to the UE according to the D2D authorization information.

The step that the MeNB acquires the D2D authorization information of the UE from the MME may include: the MeNB requests the MME for acquiring the D2D authorization information of the UE under a Public Land Mobile Network (PLMN) served by the SeNB under the condition that a PLMN served by the SeNB for the UE is different from a PLMN served by the MeNB for the UE. Alternatively, the MeNB acquires the D2D authorization information of the UE under the PLMN served by the SeNB from the MME by means of an S1 interface process, herein the S1 interface process includes: an ERAB modification indication process or an S1 interface addition process.

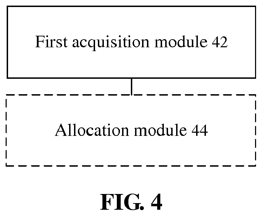

The embodiments of the disclosure provide an apparatus for acquiring D2D authorization information. FIG. 4 is a first block diagram of an apparatus for acquiring D2D authorization information according to an embodiment of the disclosure. As shown in FIG. 4, the apparatus includes:
a first acquisition module 42, configured to acquire D2D authorization information of a UE from an MeNB by means of an X2 interface process.

Alternatively, the apparatus may further include:
an allocation module 44, configured to allocate a D2D resource to the UE according to the D2D authorization information.

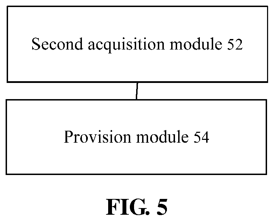

The embodiments of the disclosure also provide an apparatus for acquiring D2D authorization information. FIG. 5 is a second block diagram of an apparatus for acquiring D2D authorization information according to an embodiment of the disclosure. As shown in FIG. 5, the apparatus includes:
a second acquisition module 52, configured to acquire D2D authorization information of a UE from an MME; and
a provision module 54, configured to provide the D2D authorization information to an SeNB by means of an X2 interface process, herein the SeNB allocates a D2D resource to the UE according to the D2D authorization information.

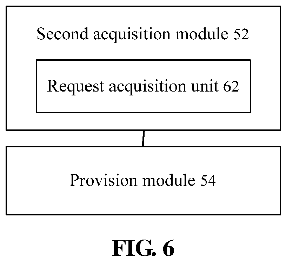

FIG. 6 is a first block diagram of an apparatus for acquiring D2D authorization information according to an alternative embodiment of the disclosure. As shown in FIG. 6, the second acquisition module 52 includes:
a request acquisition unit 62, configured to request the MME for acquiring the D2D authorization information of the UE under a PLMN served by the SeNB under the condition that a PLMN served by the SeNB for the UE is different from a PLMN served by an MeNB for the UE.

In an alternative embodiment, the request acquisition unit 62 is configured to request the MME for acquiring the D2D authorization information of the UE under a PLMN served by the SeNB in the following manner: acquiring the D2D authorization information of the UE under the PLMN served by the SeNB from the MME by means of an S1 interface process, herein the S1 interface process includes: an ERAB modification indication process or an S1 interface addition process.

Detailed description will be made below in conjunction with specific embodiments. The following alternative embodiments combine the above-mentioned alternative embodiments and alternative implementation manners thereof.

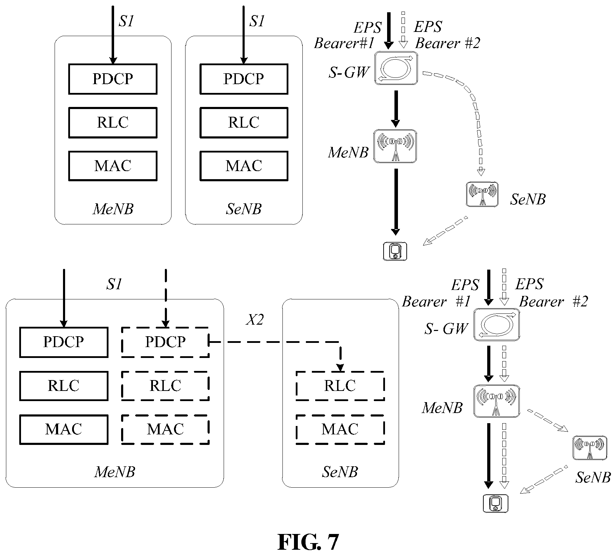

The embodiments of the disclosure provide a method for acquiring UE D2D authorization information under a micro-eNB environment. FIG. 7 is a schematic diagram of a dual connection architecture under a micro-eNB scenario according to an embodiment of the disclosure. As shown in FIG. 7, an SeNB acquires UE D2D authorization information from an MeNB by means of an X2 interface process, the UE D2D authorization information including, but not limited to, one or more of the following information: D2D communication authorization, D2D discovery authorization, relay UE authorization, remote UE authorization, and one or more PLMNs corresponding to the above authorization, herein X2 interface process includes, but not limited to, the following process: an SeNB addition process and an SeNB modification process.

Alternatively, when a PLMN served, for a UE, by the SeNB added by the MeNB for the UE is different from a PLMN served for the UE under the MeNB, the MeNB may request an MME for acquiring D2D authorization information of the UE under the PLMN served by the SeNB. The MeNB acquires authorization information of the UE under a specified PLMN from the MME by means of an S1 interface process, herein the S1 interface process includes, but not limited to, the following process: an ERAB modification indication process and an S1 interface addition process.

By means of the above-mentioned method, D2D authorization information can be acquired by means of information interaction at a network side for the characteristics of dual connection services under a complex micro-eNB environment, and a judgment basis is provided for a UE to use a D2D resource of an SeNB, thereby improving the network efficiency and performance.

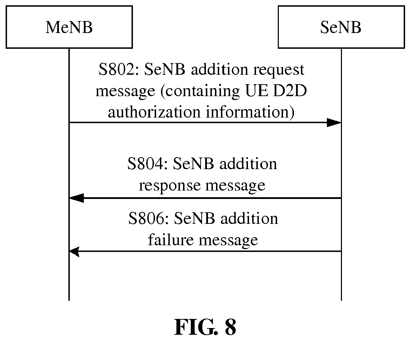

FIG. 8 is a first flowchart of a method for acquiring D2D authorization information according to an alternative embodiment of the disclosure. As shown in FIG. 8, the method includes the steps as follows.

In step S800 (not shown in the figure), an MeNB acquires D2D authorization information of a UE by means of a relevant method. For example, the MeNB acquires the D2D authorization information of the UE from an MME by means of an initial context setup request message and a UE context modification request message. Meanwhile, in a handover process, a target eNB acquires the D2D authorization information of the UE by means of an S1 handover request message for S1 handover, and the target eNB acquires the D2D authorization information of the UE by means of an X2 handover request message and an S1 path switch request acknowledge message for X2 handover.

In step S802, the MeNB determines to add an SeNB for the UE to achieve dual connection, and the MeNB sends an addition request message to the SeNB, herein the message contains the D2D authorization information of the UE, the D2D authorization information of the UE including, but not limited to, one or more of the following information: D2D communication authorization, D2D discovery authorization, relay UE authorization, remote UE authorization, and one or more PLMNs corresponding to the above authorization.

In step S804, after receiving the addition request message, the SeNB executes a local dual connection operation, and stores the D2D authorization information of the UE for subsequent D2D operation. If addition is successful, the SeNB sends an addition request acknowledge message (namely addition response message) to the MeNB. If addition is unsuccessful, step S806 is executed.

In step S806, if processing fails, the SeNB sends an addition request failure message to the MeNB.

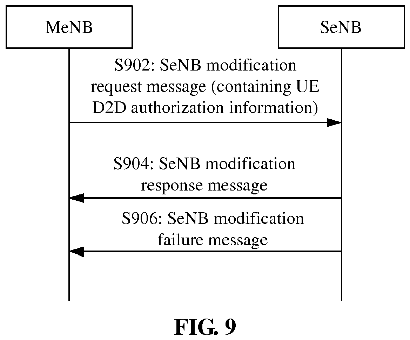

FIG. 9 is a second flowchart of a method for acquiring D2D authorization information according to an alternative embodiment of the disclosure. As shown in FIG. 9, an MeNB acquires D2D authorization information of a UE by means of a relevant method. For example, the MeNB acquires the D2D authorization information of the UE from an MME by means of an initial context setup request message and a UE context modification request message. Meanwhile, in a handover process, a target eNB acquires the D2D authorization information of the UE by means of an S1 handover request message for S1 handover, and the target eNB acquires the D2D authorization information of the UE by means of an X2 handover request message and an S1 path switch request acknowledge message for X2 handover. The UE is in a dual connection state at this time. When the MeNB discovers that the D2D authorization information of the UE is changed, the MeNB triggers an SeNB modification process, including the steps as follows.

In step S902, the MeNB sends a modification request message to an SeNB, herein the message contains the latest D2D authorization information of the UE, the D2D authorization information of the UE including, but not limited to, one or more of the following information: D2D communication authorization, D2D discovery authorization, relay UE authorization, remote UE authorization, and one or more PLMNs corresponding to the above authorization.

In step S904, after receiving the modification request message, the SeNB executes a local dual connection operation, and stores the latest D2D authorization information of the UE for subsequent D2D operation. If modification is successful, the SeNB sends a modification request acknowledge message to the MeNB. If modification is unsuccessful, step S906 is executed.

In step S906, if processing fails, the SeNB sends a modification request failure message to the MeNB.

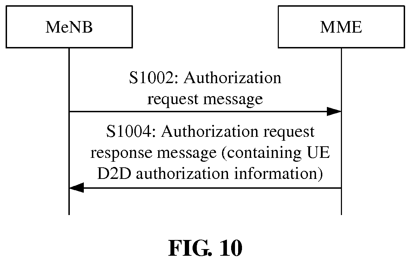

FIG. 10 is a third flowchart of a method for acquiring D2D authorization information according to an embodiment of the disclosure. As shown in FIG. 10, the method includes the steps as follows.

In step S 1002, an MeNB determines to add an SeNB for a UE to achieve dual connection, herein a PLMN served for the UE by the MeNB is a PLMN1, and a PLMN served, for the UE, by the SeNB added by the MeNB for the UE is a PLMN2. The MeNB sends an authorization acquisition request message to an MME, the message containing one or more of the following information: PLMN2, and UE D2D authorization information acquisition request indication.

In step S1004, after receiving the acquisition request message, the MME sends an acquisition response message to the MeNB, the message containing one or more of the following information: PLMN2, and D2D authorization information of a UE under PLMN2, and all pieces of UE D2D authorization information (including, but not limited to, one or more of the following information: D2D communication authorization, D2D discovery authorization, relay UE authorization, remote UE authorization, and one or more PLMNs corresponding to the above authorization).

Alternatively, the MeNB sends the D2D authorization information of the UE under the PLMN2 by means of an X2 interface message, herein acquisition, via the MeNB, the D2D authorization information of the UE from the MME may be performed before a dual connection SeNB addition process or may be performed after the SeNB addition process is successful.

The embodiments of the disclosure also provide a computer storage medium. The computer storage medium stores a computer-executable instruction. The computer-executable instruction is used to execute the method in the above-mentioned embodiments.

Obviously, a person skilled in the art shall understand that all of the above-mentioned modules or steps in the present invention may be implemented by using a universal calculation apparatus, may be centralized on a single calculation apparatus or may be distributed on a network composed of multiple calculation apparatuses. Alternatively, they may be implemented by using executable program codes of the calculation apparatuses. Thus, they may be stored in a storage apparatus and executed by the calculation apparatuses, the shown or described steps may be executed in a sequence different from this sequence under certain conditions, or they are manufactured into each integrated circuit module respectively, or multiple modules or steps therein are manufactured into a single integrated circuit module. Thus, the disclosure is not limited to a combination of any specific hardware and software.

The above is only the preferable embodiments of the disclosure, and not intended to limit the disclosure. As will occur to a person skilled in the art, the disclosure is susceptible to various modifications and changes. Any modifications, equivalent replacements, improvements and the like made within principle of the disclosure shall fall within the scope of protection of the disclosure.

## Claims

1. A method for acquiring Device-to-Device, D2D, authorization information, under the condition of dual connection, comprising:
acquiring, by a Secondary evolved Node B, SeNB, D2D authorization information of a User Equipment, UE, from a Master eNB, MeNB, by means of an X2 interface process (S202);
wherein
the X2 interface process comprises: an SeNB addition process or an SeNB modification process.

2. The method according to claim 1, wherein
the D2D authorization information comprises at least one of: D2D communication authorization, D2D discovery authorization, relay UE authorization, remote UE authorization, and one or more Public Land Mobile Networks, PLMNs, corresponding to each authorization.

3. The method according to claim 1, further comprising:
allocating, by the SeNB, a D2D resource to the UE according to the D2D authorization information.

4. A method for acquiring Device-to-Device, D2D, authorization information, under the condition of dual connection, comprising:
acquiring, by a Master evolved Node B, MeNB, D2D authorization information of a User Equipment, UE, from a Mobility Management Entity, MME (S302); and
providing, by the MeNB, the D2D authorization information to a Secondary eNB, SeNB, by means of an X2 interface process, wherein the SeNB allocates a D2D resource to the UE according to the D2D authorization information (S304);
wherein
the X2 interface process comprises: an SeNB addition process or an SeNB modification process.

5. The method according to claim 4, wherein acquiring, by the MeNB, D2D authorization information of the UE from the MME comprises:
requesting, by the MeNB, the MME for acquiring the D2D authorization information of the UE under a Public Land Mobile Network, PLMN, served by the SeNB under the condition that a PLMN served by the SeNB for the UE is different from a PLMN served by the MeNB for the UE.

6. The method according to claim 5, wherein requesting, by the MeNB, the MME for acquiring the D2D authorization information of the UE under a PLMN served by the SeNB comprises:
acquiring, by the MeNB, the D2D authorization information of the UE under the PLMN served by the SeNB from the MME by means of an S1 interface process, wherein the S1 interface process comprises: an evolved Radio Access Bearer, ERAB, modification indication process or an S1 interface addition process.

7. An apparatus for acquiring Device-to-Device, D2D, authorization information, under the condition of dual connection, comprising:
a first acquisition module (42), configured to acquire D2D authorization information of a User Equipment, UE, from a Master evolved Node B, MeNB, by means of an X2 interface process;
wherein
the X2 interface process comprises: an SeNB addition process or an SeNB modification process.

8. The apparatus according to claim 7, further comprising:
an allocation module (44), configured to allocate a D2D resource to the UE according to the D2D authorization information.

9. An apparatus for acquiring Device-to-Device, D2D authorization information, under the condition of dual connection, comprising:
a second acquisition module (52), configured to acquire D2D authorization information of a User Equipment, UE, from a Mobility Management Entity, MME; and
a provision module (54), configured to provide the D2D authorization information to a Secondary evolved Node B, SeNB, by means of an X2 interface process, wherein the SeNB allocates a D2D resource to the UE according to the D2D authorization information;
wherein
the X2 interface process comprises: an SeNB addition process or an SeNB modification process.

10. The apparatus according to claim 9, wherein the second acquisition module (52) comprises:
a request acquisition unit (62), configured to request the MME for acquiring the D2D authorization information of the UE under a Public Land Mobile Network, PLMN, served by the SeNB under the condition that a PLMN served by the SeNB for the UE is different from a PLMN served by a Master eNB, MeNB, for the UE.

11. The apparatus according to claim 10, wherein
the request acquisition unit (62) is configured to request the MME for acquiring the D2D authorization information of the UE under a PLMN served by the SeNB in the following manner: acquiring the D2D authorization information of the UE under the PLMN served by the SeNB from the MME by means of an S1 interface process, wherein the S1 interface process comprises: an evolved Radio Access Bearer, ERAB, modification indication process or an S1 interface addition process.

12. A computer storage medium having stored thereon computer-executable instructions configured to perform the method for acquiring D2D authorization information according to any one claims 1 to 3.

13. A computer storage medium having stored thereon computer-executable instructions configured to perform the method for acquiring D2D authorization information according to any one claims 4 to 6.

## Patentansprüche

1. Verfahren zum Erfassen von Gerät-zu-Gerät-(D2D-)Autorisierungsinformationen unter der Bedingung eines dualen Anschlusses, Folgendes umfassend:
Erfassen von D2D-Autorisierungsinformationen einer Benutzerausrüstung (UE) durch einen sekundären evolved Node B (SeNB) von einem Master-eNB (MeNB) mittels eines X2-Schnittstellenprozesses (S202),
wobei der X2-Schnittstellenprozess Folgendes umfasst: einen SeNB-Hinzufügungsprozess oder einen SeNB-Modifizierungsprozess.

2. Verfahren nach Anspruch 1, wobei
die D2D-Autorisierungsinformationen mindestens eines des Folgenden umfassen: D2D-Kommunikationsautorisierung, D2D-Auffindungsautorisierung, UE-Weiterleitungsautorisierung, UE-Fernautorisierung und ein oder mehrere PLMN (Public Land Mobile Networks), entsprechend jeder Autorisierung.

3. Verfahren nach Anspruch 1, ferner Folgendes umfassend:
Zuweisen einer D2D-Ressource zu dem UE gemäß den D2D-Autorisierungsinformationen durch den SeNB.

4. Verfahren zum Erfassen von Gerät-zu-Gerät-(D2D-)Autorisierungsinformationen unter der Bedingung eines dualen Anschlusses, Folgendes umfassend:
Erfassen von D2D-Autorisierungsinformationen einer Benutzerausrüstung (UE) durch einen Master-eNB (MeNB) von einer Mobilitätsverwaltungsentität (MME),
Bereitstellen der D2D-Autorisierungsinformationen für einen sekundären eNB (SeNB) durch den MeNB mittels eines X2-Schnittstellenprozesses, wobei der SeNB dem UE gemäß den D2D-Autorisierungsinformationen eine D2D-Ressource zuweist (S304),
wobei der X2-Schnittstellenprozess Folgendes umfasst: einen SeNB-Hinzufügungsprozess oder einen SeNB-Modifizierungsprozess.

5. Verfahren nach Anspruch 4, wobei das Erfassen von D2D-Autorisierungsinformationen der UE von der MME durch den MeNB Folgendes umfasst:
Abfragen der MME durch den MeNB zwecks Erfassens der D2D-Autorisierungsinformationen der UE unter einem PLMN (Public Land Mobile Network), das von dem SeNB versorgt wird, unter der Bedingung, dass sich ein PLMN, das von dem SeNB für die UE versorgt wird, von einem PLMN unterscheidet, das von dem MeNB für die UE versorgt wird.

6. Verfahren nach Anspruch 5, wobei das Abfragen der MME durch den MeNB zwecks Erfassens der D2D-Autorisierungsinformationen der UE unter einem PLMN, das von dem SeNB versorgt wird, Folgendes umfasst:
Erfassen der D2D-Autorisierungsinformationen der UE durch den MeNB unter dem PLMN, das von dem SeNB versorgt wird, von der MME mittels eines S1-Schnittstellenprozesses, wobei der S1-Schnittstellenprozess Folgendes umfasst: einen ERAB-(Evolved-Radio-Access-Bearer-)Modifizierungsanzeigeprozess oder einen S1-Schnittstellenhinzufügungsprozess.

7. Vorrichtung zum Erfassen von Gerät-zu-Gerät-(D2D-)Autorisierungsinformationen unter der Bedingung eines dualen Anschlusses, Folgendes umfassend:
ein erstes Erfassungsmodul (42), das dafür konfiguriert ist, D2D-Autorisierungsinformationen einer Benutzerausrüstung (UE) von einem Master evolved Node B (MeNB) mittels eines X2-Schnittstellenprozesses zu erfassen,
wobei der X2-Schnittstellenprozess Folgendes umfasst: einen SeNB-Hinzufügungsprozess oder einen SeNB-Modifizierungsprozess.

8. Vorrichtung nach Anspruch 7, ferner Folgendes umfassend:
ein Zuweisungsmodul (44), das dafür konfiguriert ist, dem UE gemäß den D2D-Autorisierungsinformationen eine D2D-Ressource zuzuweisen.

9. Vorrichtung zum Erfassen von Gerät-zu-Gerät-(D2D-)Autorisierungsinformationen unter der Bedingung eines Doppelanschlusses, Folgendes umfassend:
ein zweites Erfassungsmodul (54), das dafür konfiguriert ist, D2D-Autorisierungsinformationen einer Benutzerausrüstung (UE) von einer Mobilitätsverwaltungsentität (MME) zu erfassen, und
ein Bereitstellungsmodul (54), das dafür konfiguriert ist, die D2D-Autorisierungsinformationen mittels eines X2-Schnittstellenprozesses für einen sekundären evolved Node B (SeNB) bereitzustellen, wobei der SeNB dem UE gemäß den D2D-Autorisierungsinformationen eine D2D-Ressource zuweist,
wobei der X2-Schnittstellenprozess Folgendes umfasst: einen SeNB-Hinzufügungsprozess oder einen SeNB-Modifizierungsprozess.

10. Vorrichtung nach Anspruch 9, wobei das zweite Erfassungsmodul (52) Folgendes umfasst:
eine Abfrageerfassungseinheit (62), die dafür konfiguriert ist, die MME zwecks Erfassens der D2D-Autorisierungsinformationen der UE unter einem PLMN (Public Land Mobile Network), das von dem SeNB versorgt wird, abzufragen, unter der Bedingung, dass sich ein PLMN, das von dem SeNB für die UE versorgt wird, von einem PLMN unterscheidet, das von dem Master eNB (MeNB) für die UE versorgt wird.

11. Vorrichtung nach Anspruch 10, wobei
die Abfrageerfassungseinheit (62) dafür konfiguriert ist, die MME zwecks Erfassens der D2D-Autorisierungsinformationen der UE unter einem PLMN, das von dem SeNB versorgt wird, in der folgenden Weise anzufragen: Erfassen der D2D-Autorisierungsinformationen der UE unter dem PLMN, das von dem SeNB versorgt wird, von der MME mittels eines S1-Schnittstellenprozesses, wobei der S1-Schnittstellenprozess Folgendes umfasst: einen ERAB-(Evolved-Radio-Access-Bearer-)Modifizierungsanzeigeprozess oder einen S1-Schnittstellenhinzufügungsprozess.

12. Computerspeichermedium, auf dem von einem Computer ausführbare Befehle gespeichert sind, die zum Ausführen des Verfahrens zum Erfassen von D2D-Autorisierungsinformationen nach einem der Ansprüche 1 bis 3 konfiguriert sind.

13. Computerspeichermedium, auf dem von einem Computer ausführbare Befehle gespeichert sind, die zum Ausführen des Verfahrens zum Erfassen von D2D-Autorisierungsinformationen nach einem der Ansprüche 4 bis 6 konfiguriert sind.

## Revendications

1. Procédé d'acquisition d'informations d'autorisation de dispositif à dispositif, D2D, dans des conditions de double connexion, comprenant l'étape ci-dessous consistant à :
acquérir, par le biais d'une station « Node B » évoluée secondaire, SeNB, des informations d'autorisation D2D d'un équipement d'utilisateur, UE, auprès d'une station eNB maîtresse, MeNB, au moyen d'un processus d'interface X2 (S202) ;
dans lequel le processus d'interface X2 comprend : un processus d'ajout de station SeNB ou un processus de modification de station SeNB.

2. Procédé selon la revendication 1, dans lequel :
les informations d'autorisation D2D comprennent au moins l'une parmi : une autorisation de communication D2D, une autorisation de découverte D2D, une autorisation d'équipement UE de relais, une autorisation d'équipement UE à distance, et un ou plusieurs réseaux mobiles terrestres publics, PLMN, correspondant à chaque autorisation.

3. Procédé selon la revendication 1, comprenant en outre l'étape ci-dessous consistant à :
affecter, par le biais de la station SeNB, une ressource D2D à l'équipement UE selon les informations d'autorisation D2D.

4. Procédé d'acquisition d'informations d'autorisation de dispositif à dispositif, D2D, dans des conditions de double connexion, comprenant les étapes ci-dessous consistant à :
acquérir, par le biais d'une station « Node B » évoluée maîtresse, MeNB, des informations d'autorisation D2D d'un équipement d'utilisateur, UE, auprès d'une entité de gestion de la mobilité, MME (S302) ; et
fournir, par le biais de la station MeNB, les informations d'autorisation D2D à une station eNB secondaire, SeNB, au moyen d'un processus d'interface X2, dans lequel la station SeNB affecte une ressource D2D à l'équipement UE selon les informations d'autorisation D2D (S304) ;
dans lequel le processus d'interface X2 comprend : un processus d'ajout de station SeNB ou un processus de modification de station SeNB.

5. Procédé selon la revendication 4, dans lequel l'étape d'acquisition, par le biais de la station MeNB, des informations d'autorisation D2D de l'équipement UE, auprès de l'entité MME, comprend l'étape ci-dessous consistant à :
demander, par le biais de la station MeNB, à l'entité MME d'acquérir les informations d'autorisation D2D de l'équipement UE sous la commande d'un réseau mobile terrestre public, PLMN, desservi par la station SeNB, à condition qu'un réseau PLMN desservi par la station SeNB pour l'équipement UE soit différent d'un réseau PLMN desservi par la station MeNB pour l'équipement UE.

6. Procédé selon la revendication 5, dans lequel l'étape de demande, par le biais de la station MeNB, à l'entité MME d'acquérir les informations d'autorisation D2D de l'équipement UE sous la commande d'un réseau PLMN desservi par la station SeNB, comprend l'étape ci-dessous consistant à :
acquérir, par le biais de la station MeNB, les informations d'autorisation D2D de l'équipement UE sous la commande du réseau PLMN desservi par la station SeNB, auprès de l'entité MME, au moyen d'un processus d'interface S1, dans lequel le processus d'interface S1 comprend : un processus d'indication de modification de porteuse d'accès radio évoluée, ERAB, ou un processus d'ajout d'interface S1.

7. Appareil destiné à acquérir des informations d'autorisation de dispositif à dispositif, D2D, dans des conditions de double connexion, comprenant :
un premier module d'acquisition (42), configuré de manière à acquérir des informations d'autorisation D2D d'un équipement d'utilisateur, UE, auprès d'une station « Node B » évoluée maîtresse, MeNB, au moyen d'un processus d'interface X2 ;
dans lequel le processus d'interface X2 comprend : un processus d'ajout de station SeNB ou un processus de modification de station SeNB.

8. Appareil selon la revendication 7, comprenant en outre :
un module d'affectation (44), configuré de manière à affecter une ressource D2D à l'équipement UE selon les informations d'autorisation D2D.

9. Appareil destiné à acquérir des informations d'autorisation de dispositif à dispositif, D2D, dans des conditions de double connexion, comprenant :
un second module d'acquisition (52), configuré de manière à acquérir des informations d'autorisation D2D d'un équipement d'utilisateur, UE, auprès d'une entité de gestion de la mobilité, MME ; et
un module de fourniture (54), configuré de manière à fournir les informations d'autorisation D2D à une station « Node B » évoluée secondaire, SeNB, au moyen d'un processus d'interface X2, dans lequel la station SeNB affecte une ressource D2D à l'équipement UE selon les informations d'autorisation D2D ;
dans lequel le processus d'interface X2 comprend : un processus d'ajout de station SeNB ou un processus de modification de station SeNB.

10. Appareil selon la revendication 9, dans lequel le second module d'acquisition (52) comprend :
une unité d'acquisition de demande (62), configurée de manière à demander à l'entité MME d'acquérir les informations d'autorisation D2D de l'équipement UE sous la commande d'un réseau mobile terrestre public, PLMN, desservi par la station SeNB, à condition qu'un réseau PLMN desservi par la station SeNB pour l'équipement UE soit différent d'un réseau PLMN desservi par une station eNB maîtresse, MeNB, pour l'équipement UE.

11. Appareil selon la revendication 10, dans lequel :
l'unité d'acquisition de demande (62) est configurée de manière à demander à l'entité MME d'acquérir les informations d'autorisation D2D de l'équipement UE sous la commande d'un réseau PLMN desservi par la station SeNB de la manière suivante consistant à : acquérir les informations d'autorisation D2D de l'équipement UE sous la commande du réseau PLMN desservi par la station SeNB, auprès de l'entité MME, au moyen d'un processus d'interface S1, dans lequel le processus d'interface S1 comprend : un processus d'indication de modification de porteuse d'accès radio évoluée, ERAB, ou un processus d'ajout d'interface S1.

12. Support de stockage informatique sur lequel sont stockées des instructions exécutables par ordinateur configurées de manière à mettre en oeuvre le procédé d'acquisition d'informations d'autorisation D2D selon l'une quelconque des revendications 1 à 3.

13. Support de stockage informatique sur lequel sont stockées des instructions exécutables par ordinateur configurées de manière à mettre en oeuvre le procédé d'acquisition d'informations d'autorisation D2D selon l'une quelconque des revendications 4 à 6.
